# EUROPÄISCHE PATENTSCHRIFT

(11) **EP 4 515 114 B1**
(45) Veröffentlichungstag und Bekanntmachung des Hinweises auf die Patenterteilung: **28.10.2026**
(21) Anmeldenummer: 23712148.8
(22) Anmeldetag: 07.03.2023
(51) Int. Cl.: F16D 7/02, F16D 13/70

(54) **DREHMOMENTBEGRENZUNGSVORRICHTUNG**
TORQUE-LIMITING DEVICE
DISPOSITIF DE LIMITATION DE COUPLE

(30) Priorität: 25.04.2022 DE 102022109828
(43) Veröffentlichungstag der Anmeldung: 05.03.2025
(73) Patentinhaber: Schaeffler Technologies AG & Co. KG, 91074 Herzogenaurach (DE)
(72) Erfinder: WIEGE, Viktor, 77815 Bühl (DE); DANNHÄUSER, Matthias, 75239 Eisingen (DE)
(74) Vertreter: Schaeffler Technologies
(86) Internationale Anmeldenummer: PCT/DE2023/100178
(87) Internationale Veröffentlichungsnummer: WO 2023/208265

(56) Entgegenhaltungen:
- EP-A2- 2 317 173
- DE-A1- 10 220 205

## Beschreibung

Die vorliegende Erfindung betrifft eine Drehmomentbegrenzungsvorrichtung, insbesondere für einen hybriden Antriebsstrang eines Kraftfahrzeugs.

Es wird als bekannt angesehen, dass Drehmomentbegrenzungsvorrichtungen in hybridisierten Antriebsstränge zwischen dem Schwungrad des Verbrennungsmotors und der an der Getriebeeingangswelle befindlichen Drehschwingungsdämpfungsvorrichtung angeordnet sind.

Die Drehmomentbegrenzungsvorrichtung hat die Aufgabe, die Getriebeeingangswelle und weitere mit der Getriebeeingangswelle verbundene Komponenten des Antriebsstrangs vor Überlastungen zu schützen. Diese Überlastungen können auftreten, wenn Drehmomentspitzen zwischen dem Verbrennungsmotor und der Getriebeeingangswelle auftreten. Dabei arbeiten Drehmomentbegrenzungsvorrichtungen reibschlüssig. Sollte die auf die Lamellen und Reibbeläge wirkende Klemmkraft nicht ausreichend sein, um das über einen bestimmten Grenzwert steigende Drehmoment zu übertragen, so rutschen die Lamellen und die Reibbeläge durch. Fällt das Drehmoment wieder unter den bestimmten Grenzwert, wird die Relativverdrehung zwischen Lamellen und Reibbelägen unterbunden, und das Drehmoment wird wieder komplett übertragen. Die auf die Lamellen und Reibbeläge wirkende Klemmkraft soll konstant bleiben und wird bei der Herstellung der Drehmomentbegrenzungsvorrichtung eingestellt.

Als bekannt angesehene Drehmomentbegrenzungsvorrichtung haben kaum Einstellmöglichkeiten, um die Klemmkraft zuverlässig einzustellen. Daher ist bei diesen Drehmomentbegrenzungsvorrichtung die Klemmkraft sehr toleranzbelastet und ändert sich auch über die Lebensdauer der Drehmomentbegrenzungsvorrichtung übermäßig stark.

Aus der EP2317173A2 ist eine Drehmomentbegrentzungsvorrichtung bekannt, die eine Fliehkraftsicherung aufweist.

Es ist Aufgabe der vorliegenden Erfindung, eine Drehmomentbegrenzungsvorrichtung anzugeben, die einfach einstellbar ist, eine möglichst konstante Klemmkraft aufweist und diese Klemmkraft auch im Betrieb beibehält.

Erfindungsgemäß gelöst wird diese Aufgabe durch eine Drehmomentbegrenzungsvorrichtung gemäß Anspruch 1, mit einer Federeinrichtung, einer in axialer Richtung der Drehmomentbegrenzungsvorrichtung ortsfesten Mitnehmerscheibe, die einen Verbindungsbereich zur Verbindung einer Eingangsseite der Drehmomentbegrenzungsvorrichtung mit einem Schwungrad eines Antriebsstrangs und einen Reibbereich aufweist, einer in axialer Richtung durch die Federeinrichtung vorgespannten Gegenscheibe und einer Klemmscheibe, die reibschlüssig zwischen dem Reibbereich der Mitnehmerscheibe und der Gegenscheibe geklemmt ist, wobei die Gegenscheibe zumindest einen sich in axialer Richtung erstreckenden Laschenabschnitt aufweist, der sich in radialer Richtung der Drehmomentbegrenzungsvorrichtung außerhalb der Klemmscheibe durch zumindest eine in der Mitnehmerscheibe eingebrachten Aussparung hindurcherstreckt und über den die Gegenscheibe durch die Federeinrichtung entgegen der Mitnehmerscheibe vorgespannt ist, um die Klemmscheibe zwischen der Mitnehmerscheibe und der Gegenscheibe reibschlüssig zu klemmen.

Da die Mitnehmerscheibe zumindest eine Fliehkraftsicherung zur Verhinderung einer fliehkraftbedingten Verformung des Laschenabschnitts aufweist, kann die Klemmkraft auch im Betrieb der Drehmomentbegrenzungsvorrichtung, d.h. auch bei hohen Drehzahlen, zuverlässig aufrechterhalten und konstant gehalten werden.

Bevorzugte Ausführungsbeispiele sind in den abhängigen Ansprüchen dargelegt.

Vorzugsweise ist die Fliehkraftsicherung innerhalb der Aussparung angeordnet. Dies ermöglicht einen besonders kompakten und zuverlässigen Aufbau.

Vorzugsweise ist pro Aussparung eine Fliehkraftsicherung vorgesehen. Dies ermöglicht gleichermaßen einen besonders kompakten und zuverlässigen Aufbau.

Es ist von Vorteil, wenn die Fliehkraftsicherung zumindest einen Zungenabschnitt aufweist, der einteilig mit der Mitnehmerscheibe ausgebildet ist. Dies ermöglicht gleichermaßen einen besonders kompakten und zuverlässigen Aufbau.

Vorzugsweise liegt ein freies Ende des Zungenabschnitts in radialer Richtung von außen an einem Axialabschnitt des Laschenabschnitts an. Praktisch ist im Ruhezustand der Drehmomentbegrenzungsvorrichtung ggf. ein minimaler Spalt vorgesehen, der die Herstellbarkeit der Drehmomentbegrenzungsvorrichtung ermöglicht und verhindert, dass die eingestellte Klemmkraft durch die Fliehkraftsicherung verstellt wird. Unter Drehzahl wird dieser Spalt durch elastische Verformung des Laschenabschnitts geschlossen.

Vorzugsweise ist der Zungenabschnitt vollständig innerhalb der Aussparung angeordnet. Dies ermöglicht einen besonders kompakten und zuverlässigen Aufbau.

Alternativ vorzugsweise springt der Zungenabschnitt in axialer Richtung aus der durch die restliche Mitnehmerscheibe definierten Ebene hervor.

Vorzugsweise weist die Fliehkraftsicherung ferner einen Drahtring auf, der zwischen dem Zungenabschnitt und der restlichen Mitnehmerscheibe geklemmt ist, und der in radialer Richtung von außen am Laschenabschnitt anliegt. Praktisch ist im Ruhezustand der Drehmomentbegrenzungsvorrichtung ggf. ein minimaler Spalt vorgesehen, der die Herstellbarkeit der Drehmomentbegrenzungsvorrichtung ermöglicht und verhindert, dass die eingestellte Klemmkraft durch die Fliehkraftsicherung verstellt wird. Unter Drehzahl wird dieser Spalt durch elastische Verformung des Laschenabschnitts geschlossen.

Alternativ vorzugsweise weist ein freies Ende des Laschenabschnitts einen Hakenbereich auf, an dem der Zungenabschnitt anliegt. Praktisch ist im Ruhezustand der Drehmomentbegrenzungsvorrichtung ggf. ein minimaler Spalt vorgesehen, der die Herstellbarkeit der Drehmomentbegrenzungsvorrichtung ermöglicht und verhindert, dass die eingestellte Klemmkraft durch die Fliehkraftsicherung verstellt wird. Unter Drehzahl wird dieser Spalt durch elastische Verformung des Laschenabschnitts geschlossen.

Es ist von Vorteil, wenn die Fliehkraftsicherung ein Sicherungsplättchen aufweist, das in die Aussparung eingelassen ist, und das in radialer Richtung von außen am Laschenabschnitt anliegt. Praktisch ist im Ruhezustand der Drehmomentbegrenzungsvorrichtung ggf. ein minimaler Spalt vorgesehen, der die Herstellbarkeit der Drehmomentbegrenzungsvorrichtung ermöglicht und verhindert, dass die eingestellte Klemmkraft durch die Fliehkraftsicherung verstellt wird. Unter Drehzahl wird dieser Spalt durch elastische Verformung des Laschenabschnitts geschlossen.

Die vorliegende Erfindung wird nachfolgend anhand von bevorzugten Ausführungsbeispielen in Verbindung mit den zugehörigen Figuren näher erläutert. In diesen zeigen:
- Figur 1:: ein erstes Ausführungsbeispiel einer an einem Schwungrad montierbaren Drehmomentbegrenzungsvorrichtung, bei der Laschenabschnitte noch nicht in Anlage mit einer niedergehaltenen Tellerfeder gebracht worden sind,
- Figur 2:: die Drehmomentbegrenzungsvorrichtung aus Figur 1, bei der die Laschenabschnitte zwar in Anlage mit der niedergehaltenen Tellerfeder gebracht worden sind, aber noch nicht gegen Fliehkraft gesichert worden sind,
- Figur 3:: die Drehmomentbegrenzungsvorrichtung aus Figur 2, mit fertig ausgebildeter Fliehkraftsicherung durch plastisch verformte Zungenabschnitte,
- Figur 4:: ein zweites Ausführungsbeispiel einer an einem Schwungrad montierbaren Drehmomentbegrenzungsvorrichtung, bei der die Laschenabschnitte zwar in Anlage mit der niedergehaltenen Tellerfeder gebracht worden sind, aber noch nicht gegen Fliehkraft gesichert worden sind,
- Figur 5:: die Drehmomentbegrenzungsvorrichtung aus Figur 4, mit fertig ausgebildeter Fliehkraftsicherung durch Sicherungsplättchen,
- Figur 6:: ein drittes Ausführungsbeispiel einer an einem Schwungrad montierbaren Drehmomentbegrenzungsvorrichtung, mit fertig ausgebildeter Fliehkraftsicherung durch einen Drahtring und plastisch verformte Zungenabschnitte, und
- Figur 7:: ein viertes Ausführungsbeispiel einer an einem Schwungrad montierbaren Drehmomentbegrenzungsvorrichtung, mit fertig ausgebildeter Fliehkraftsicherung durch plastisch verformte Zungenabschnitte.

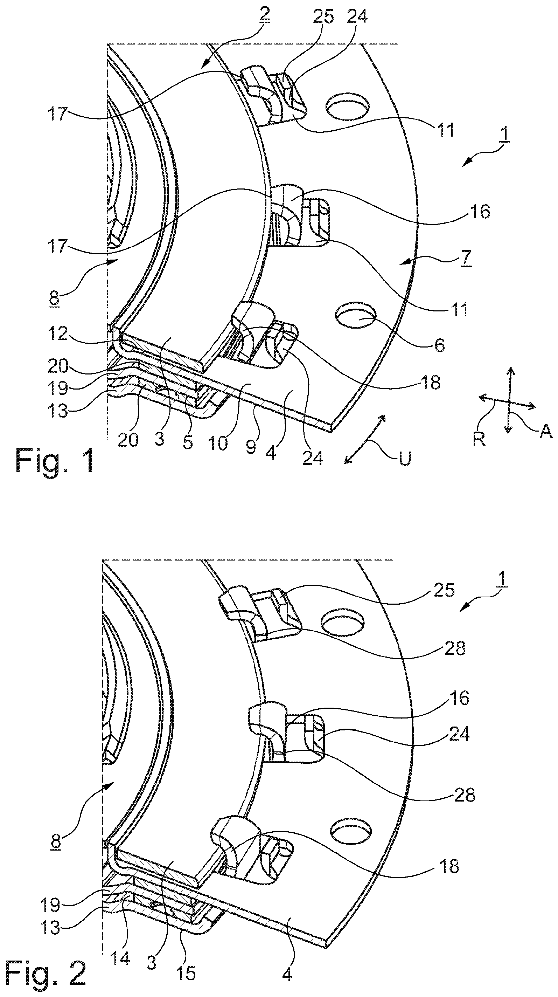

Die Figuren 1 bis 7 betreffen vier Ausführungsbeispiele von an Schwungrädern montierbaren Drehmomentbegrenzungsvorrichtungen 1, die insbesondere in hybridisierten Antriebssträngen von Kraftfahrzeugen zum Einsatz kommen können. Merkmale, die in der nachfolgenden Beschreibung nicht als erfindungswesentlich gekennzeichnet sind, sind als optional zu verstehen.

Das in Figur 1 bis 3 dargestellte erste Ausführungsbeispiel der Drehmomentbegrenzungsvorrichtung 1 ist bezüglich einer Drehachse drehbar angeordnet. Das Schwungrad kann mit einer Eingangsseite 7 der Drehmomentbegrenzungsvorrichtung 1 drehfest verbunden werden. Insbesondere ist die Eingangsseite 7 der Drehmomentbegrenzungsvorrichtung 1 durch einen Außenbereich einer in axialer Richtung A der Drehmomentbegrenzungsvorrichtung 1 ortsfesten Mitnehmerscheibe 4 der Drehmomentbegrenzungsvorrichtung 1 ausgebildet. Der Außenbereich der Mitnehmerscheibe 4 bildet einen Verbindungsbereich 6, in dem insbesondere Löcher in Umfangsrichtung U der Drehmomentbegrenzungsvorrichtung 1 verteilt angeordnet sind, durch die die Mitnehmerscheibe 4 drehfest mit dem Schwungrad verbunden, vorzugsweise verschraubt, ist bzw. werden kann.

Zusätzlich zum Verbindungsbereich 6 zur Verbindung der Eingangsseite 7 der Drehmomentbegrenzungsvorrichtung 1 mit dem Schwungrad weist die Mitnehmerscheibe 4 einen Reibbereich 5 zur reibschlüssigen Anlage mit einer Klemmscheibe 19 der Drehmomentbegrenzungsvorrichtung 1 auf. Insbesondere ist der Reibbereich 5 in radialer Richtung R der Drehmomentbegrenzungsvorrichtung 1 innerhalb des Verbindungsbereichs 6 ausgebildet.

Ferner weist die Drehmomentbegrenzungsvorrichtung 1 eine Federeinrichtung 2 und eine in axialer Richtung A durch die Federeinrichtung 2 vorgespannte Gegenscheibe 13 auf. Die Federeinrichtung 2 ist insbesondere als Tellerfeder 3 ausgebildet.

Eine erste Seite 21 der Klemmscheibe 19 steht in reibschlüssiger Anlage mit dem auf einer ersten Seite 9 der Mitnehmerscheibe 4 ausgebildeten Reibbereich 5. Die erste Seite 21 der Klemmscheibe 19 ist eine Oberfläche der Klemmscheibe 19, die zum Schwungrad hin weist. Eine zweite, der ersten Seite 21 in axialer Richtung A gegenüberliegende Seite 22 der Klemmscheibe 19 oder einer nicht dargestellten, weiteren Klemmscheibe steht in reibschlüssiger Anlage mit einer ersten Seite 14 der Gegenscheibe 13. Die zweite Seite 22 der Klemmscheibe 19 ist eine Oberfläche der Klemmscheibe 19, die vom Schwungrad weg weist.

Die erste Seite 9 der Mitnehmerscheibe 4 ist eine Oberfläche der Mitnehmerscheibe 4, die vom Schwungrad weg weist. Eine zweite, der ersten Seite 9 in axialer Richtung A gegenüberliegende Seite 10 der Mitnehmerscheibe 4 ist eine Oberfläche der Mitnehmerschiebe 4, die zum Schwungrad hin weist und sich insbesondere im Verbindungsbereich 6 mit dem Schwungrad durch die Verschraubung in drehfester Anlage befindet. Vorzugsweise ist auf der zweiten Seite 10 der Mitnehmerscheibe 4 zumindest ein Nockenabschnitt 12 ausgebildet, an dem die Tellerfeder 3 verkippbar anliegt. Der Nockenabschnitt 12 ist insbesondere als ringförmige, durchgehende Sicke oder als unterbrochene, gebogene Sickensegmente ausgebildet.

Die erste Seite 14 der Gegenscheibe 13 ist eine Oberfläche der Gegenscheibe 13, die zum Schwungrad hin weist. Eine zweite, der ersten Seite 14 in axialer Richtung A gegenüberliegende Seite 15 der Gegenscheibe 13 ist eine Oberfläche der Gegenschiebe 13, die vom Schwungrad weg weist und insbesondere zu einem nicht dargestellten, nachfolgengen Teil des Antriebsstrangs, beispielsweise einem Hybridmodul oder einem Getriebe, hin weist.

Bezüglich des Reibbereichs 5 sei an dieser Stelle darauf hingewiesen, dass Reibbeläge 20 der Mitnehmerscheibe 4 und der Gegenscheibe 13 zugeordnet sind, indem sie drehfest an der ersten Seite 9 der Mitnehmerscheibe 4 und an der ersten Seite 14 der Gegenscheibe 13 ausgebildet bzw. drehfest mit diesen Scheiben 4, 13 verbunden sind. Ebenso ist es möglich, dass beidseitig angeordnete Reibbeläge 20 der Klemmscheibe 19 zugeordnet sind, indem diese Reibbeläge 20 vorzugsweise drehfest an ihrem Träger ausgebildet bzw. drehfest mit dem Träger verbunden sind. Auch ist es möglich, diese Reibbeläge 20 löse einzulegen oder auf sie zu verzichten, so dass der Begriff der reibschlüssigen Anlage eine unmittelbare Anlage oder eine Anlage unter Vermittlung eines bzw. eines einzigen weiteren Reibmittels, wie z.B. eines Reibbelags 20, verlangt.

Die Klemmscheibe 19 stellt eine Ausgangsseite 8 der Drehmomentbegrenzungsvorrichtung 1 dar. Im dargestellten Ausführungsbeispiel bildet die Klemmscheibe 19 gleichermaßen die Eingangsseite einer nachfolgenden Drehschwingungsdämpfungsvorrichtung, die vorzugsweise in radialer Richtung R innerhalb der Drehmomentbegrenzungsvorrichtung 1 angeordnet ist. Insbesondere bildet die Klemmscheibe 19 im dargestellten Ausführungsbeispiel einen Eingangsflansch oder eine Seitescheiben der nachfolgenden Drehschwingungsdämpfungsvorrichtung.

Die Gegenscheibe 13 weist zumindest einen, im dargestellten Ausführungsbeispiel mehrere in Umfangsrichtung U verteilt angeordnete, sich in axialer Richtung A von einem Außendurchmesser der Mitnehmerscheibe 4 erstreckende Laschenabschnitte 16 auf. Die Laschenabschnitte 16 erstrecken sich durch eine entsprechende Anzahl in Umfangsrichtung U verteilt angeordneter, in der Mitnehmerscheibe 4 eingebrachter Aussparungen 11 hindurch. Vorzugsweise sind die Laschenabschnitte 16 einteilig mit der Gegenscheibe 13 ausgebildet.

Dabei ist es insbesondere von Vorteil, wenn die Gegenscheibe 13 als Blechbauteil ausgebildet ist und die Laschenabschnitte 16 während der Montage und Einstellung der Klemmkraft der Drehmomentbegrenzungsvorrichtung 1 plastisch verformbar sind. In diesem Zusammenhang ist es weiterhin von Vorteil, wenn die Aussparungen 11 in radialer Richtung R der Drehmomentbegrenzungsvorrichtung 1 eine größere Erstreckung als eine in radialer Richtung R gemessene Dicke der Laschenabschnitte 16 aufweisen, so dass der jeweilige Laschenabschnitt 16 innerhalb der Aussparung 11, durch die er sich hindurcherstreckt, in radialer Richtung R plastisch verformbar ist.

Im dargestellten Ausführungsbeispiel sind die Aussparungen 11 in radialer Richtung R zwischen dem Reibbereich 5 und dem Verbindungsbereich 6 der Mitnehmerscheibe 4 angeordnet. Über die Laschenabschnitte 16 ist die Gegenscheibe 13 durch die Federeinrichtung 2 bzw. durch die Tellerfeder 3 entgegen der Mitnehmerscheibe 4 vorgespannt, um die Klemmscheibe 19 zwischen der Mitnehmerscheibe 4 und der Gegenscheibe 13 reibschlüssig zu klemmen und ein Durchrutschen der Drehmomentbegrenzungsvorrichtung 1 beim Überschreiten eines Grenzdrehmoments zu ermöglichen.

Im dargestellten Ausführungsbeispiel weist jeder der Laschenabschnitte 16 ein freies Ende 17 mit einem Hakenbereich 18 auf. Die Federeinrichtung 2 ist in axialer Richtung A zwischen dem Hakenbereich 18 und der zweiten Seite 10 der Mitnehmerscheibe 4 geklemmt, um die Gegenscheibe 13 in axialer Richtung A vorzuspannen. Insbesondere ist die Tellerfeder 3 in axialer Richtung A zwischen dem Hakenbereich 18 und dem Nockenabschnitt 12 der Mitnehmerscheibe 4 geklemmt, um die Gegenscheibe 13 in axialer Richtung A vorzuspannen. Insbesondere erstrecken sich die Hakenbereiche 18 der Laschenabschnitte 16 in radialer Richtung R nach innen, so dass Tellerfeder 3 in radialer Richtung R innerhalb der Laschenabschnitte 16 angeordnet ist und die Hakenbereiche 18 die Tellerfeder 3 von radial außen kontaktieren.

Es ist von Vorteil, wenn wie in den Figuren dargestellt, die Tellerfeder 3 in einem möglichst flachen, d.h. nicht aufgestellten Zustand zwischen der Mitnehmerscheibe 4 und Gegenscheibe 13 vorgespannt ist. Dadurch entsteht eine ausreichende Klemmkraft. Um Fertigungstoleranzen auszugleichen, kann die Klemmkraft mittels Nachbiegen der Hakenbereiche 18 der Laschenabschnitte 16 in radialer Richtung R eingestellt werden.

Im Zustand der Drehmomentbegrenzungsvorrichtung 1, der in Figur 1 dargestellt ist, sind die Laschenabschnitte 16 noch nicht in Anlage mit der niedergehaltenen Tellerfeder 3 gebracht worden.

Zuvor sind die Laschenabschnitte 16 der Gegenscheibe 13 unter Zwischenlage der Klemmscheibe 19 zwischen der Mitnehmerscheibe 4 und der Gegenscheibe 13 durch die Aussparungen 11 in der Mitnehmerscheibe 4 hindurchgeführt worden. Die Erstreckung der Aussparungen 11 in radialer Richtung R ist dabei groß genug, dass die Laschenabschnitte 16 in einer geneigten Position durch die Aussparungen 11 hindurchgeführt werden können, so dass auf der zweiten Seite 10 der Mitnehmerscheibe 4 die aufgestellte, entspannte Tellerfeder 3 in radialer Richtung R innerhalb der Hakenbereiche 18 bzw. der freien Enden 17 der Laschenabschnitte 16 aufgelegt werden kann.

Nach der Bestimmung des Kraftverlaufs der als Tellerfeder 3 ausgebildeten Federeinrichtung 2 ist die Tellerfeder 3 durch einen oder mehrere Niederhalter in axialer Richtung A auf die Mitnehmerscheibe 4 hin komprimiert und auf dem gewünschten Kraftniveau gehalten worden.

Im Zustand der Drehmomentbegrenzungsvorrichtung 1, der in Figur 2 dargestellt ist, sind die Laschenabschnitte 16 in radialer Richtung R nach innen und/oder in axialer Richtung A mittels eines oder mehrerer Stempel derart plastisch verformt worden, dass die Laschenabschnitte 16 in Anlage mit der niedergehaltenen Tellerfeder 3 kommen. Dann sind die der oder die Niederhalter gelöst worden, so dass die Tellerfeder 3 ausschließlich durch die plastisch verformten Laschenabschnitte 16 auf dem gewünschten Kraftniveau gehalten wird. Um Fertigungstoleranzen auszugleichen, kann die Klemmkraft ggf. mittels Nachbiegen der Hakenbereiche 18 der Laschenabschnitte 16 in radialer Richtung R eingestellt werden.

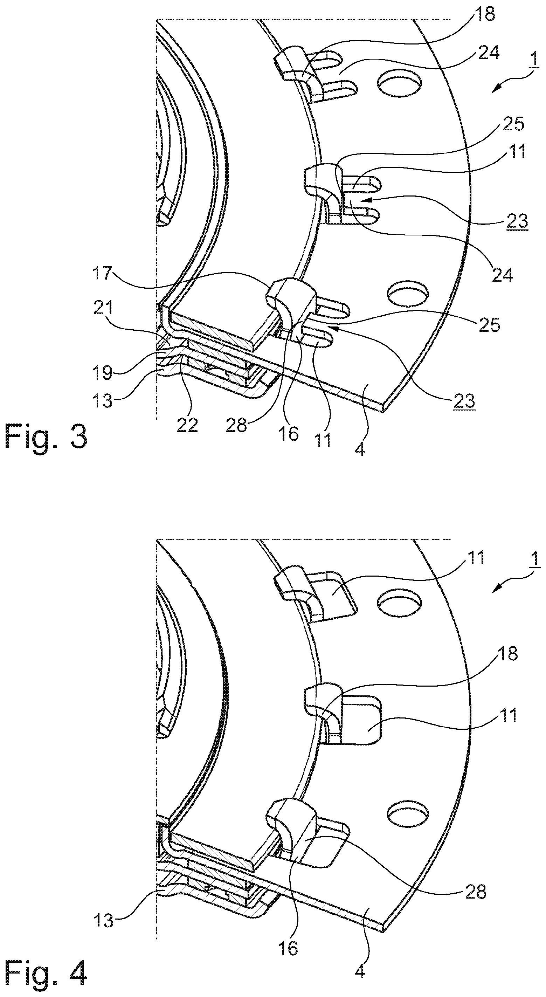

Im Zustand der Drehmomentbegrenzungsvorrichtung 1, der in Figur 3 dargestellt ist, weist die Mitnehmerscheibe 4 zumindest eine Fliehkraftsicherung 23 zur Verhinderung einer fliehkraftbedingten Verformung des Laschenabschnitts 16 auf. Diese Fliehkraftsicherung 23 weist zumindest einen Zungenabschnitt 24 auf, der einteilig mit der Mitnehmerscheibe 4 ausgebildet ist. In den Figuren 1 und 2 sind die Zungenabschnitte 24 der Fliehkraftsicherung 23 auch schon dargestellt, jedoch ist die Fliehkraftsicherung 23 als solche noch nicht wirksam, da die Zungenabschnitte 24 noch nicht auf die Laschenabschnitte 16 wirken.

Dies geschieht erst, indem freie Enden 25 der Zungenabschnitte 24, die sich in den Figuren 1 und 2 in axialer Richtung A erstrecken, plastisch verformt werden, so dass sie sich in radialer Richtung R erstrecken, wie dies in Figur 3 dargestellt ist, um von außen an Axialabschnitten 28 der Laschenabschnitt 16 in Anlage zu kommen und diese gegen eine fliehkraftbedingte Verformung, d.h. eine Aufweitung im Betrieb der Drehmomentbegrenzungsvorrichtungen 1 nach außen, zu sichern, nachdem die Laschenabschnitte 16 wie zuvor beschrieben eingestellt worden sind.

Pro Aussparung 11 ist in dem in Figur 3 gezeigten Ausführungsbeispiel jeweils eine Fliehkraftsicherung 23 vorgesehen. Jede der Fliehkraftsicherungen 23 ist vollständig innerhalb der jeweiligen Aussparung 11 angeordnet. Die Zungenabschnitte 24 der Fliehkraftsicherung 23 sind insbesondere einteilig mit der Mitnehmerscheibe 4 ausgebildet. Ferner sind in dem in Figur 3 gezeigten Ausführungsbeispiel die Zungenabschnitte 24 vollständig innerhalb der jeweiligen Aussparungen 11 angeordnet und erstrecken sich insbesondere von einem radial äußeren Rand der jeweiligen Aussparung 11 in radialer Richtung R nach innen.

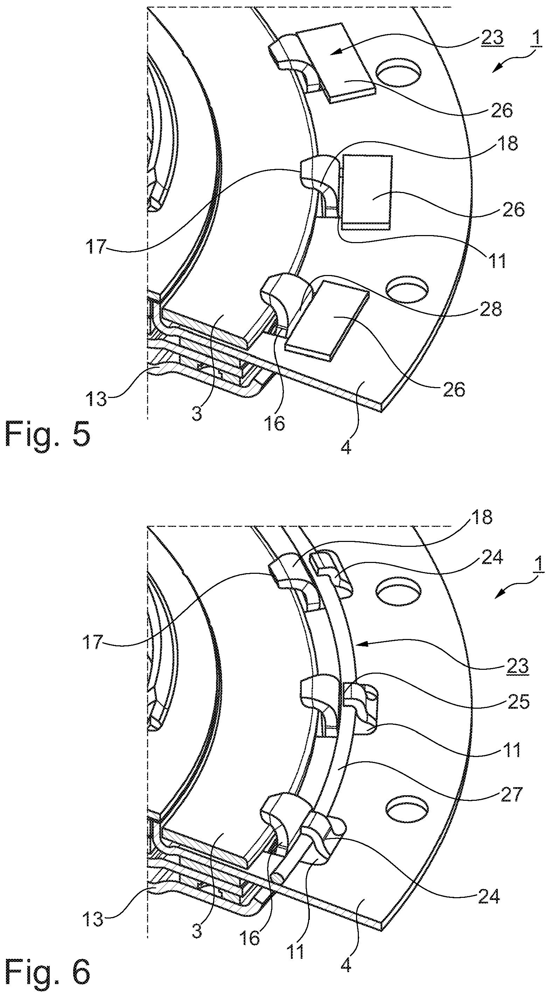

Das in den Figur 4 und 5 dargestellte zweite Ausführungsbeispiel der Drehmomentbegrenzungsvorrichtung 1 unterscheidet sich hinsichtlich der Figuren 1 und 2 dadurch, dass die Fliehkraftsicherung 23 keine Zungenabschnitte 24 aufweist, die in den Aussparungen 11 angeordnet sind und einteilig mit der Mitnehmerscheibe 4 ausgebildet sind.

Stattdessen weist die Fliehkraftsicherung 23 Sicherungsplättchen 26 auf. Pro Aussparung 11 ist in dem in Figur 5 gezeigten Ausführungsbeispiel jeweils ein Sicherungsplättchen 26 in die jeweilige Aussparung 11 eingelassen. Jedes der Sicherungsplättchen 26 liegt in radialer Richtung R von außen am jeweiligen Laschenabschnitt 16, genauer gesagt am jeweiligen Axialabschnitt 28, an. Vorzugsweise sind die Sicherungsplättchen 26 aus Kunststoff ausgebildet und/oder in die Aussparungen 11 eingeklipst.

Das in Figur 6 dargestellte dritte Ausführungsbeispiel der Drehmomentbegrenzungsvorrichtung 1 unterscheidet sich hinsichtlich der Figuren 1 und 2 dadurch, dass die Fliehkraftsicherung 23 zwar Zungenabschnitte 24 aufweist, diese sich aber nicht mit den Laschenabschnitten 16 in Anlage befinden.

Stattdessen weist die Fliehkraftsicherung 23 zusätzlich einen Drahtring 27 auf, der zwischen den Zungenabschnitten 24 und der restlichen Mitnehmerscheibe 4 geklemmt ist. Dieser Drahtring 27 liegt mit seinem inneren Rand in radialer Richtung R von außen an den Laschenabschnitt 16, genauer gesagt an den Axialabschnitten 28, an.

Zur Klemmung des Drahtrings 27 springen die Zungenabschnitt 24 vorzugsweise in axialer Richtung A aus der durch die restliche Mitnehmerscheibe 4 definierten Ebene hervor, d.h. sind in axialer Richtung A ausgestellt.

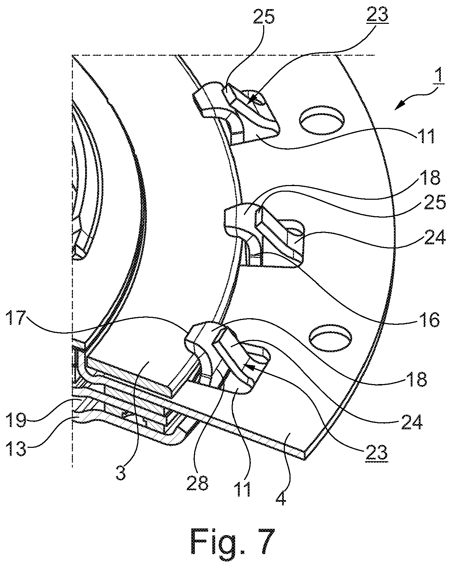

Das in Figur 7 dargestellte vierte Ausführungsbeispiel der Drehmomentbegrenzungsvorrichtung 1 unterscheidet sich hinsichtlich der Figuren 1 und 2 dadurch, dass die Fliehkraftsicherung 23 zwar Zungenabschnitte 24 aufweist, diese sich aber nicht mit den Axialabschnitten 28 der Laschenabschnitte 16 in Anlage befinden.

Stattdessen springen die Zungenabschnitt 24 vorzugsweise in axialer Richtung A aus der durch die restliche Mitnehmerscheibe 4 definierten Ebene hervor, d.h. sind in axialer Richtung A ausgestellt, ähnlich wie in Figur 6. Die Zungenabschnitte 24 liegen an den jeweiligen Hakenbereichen 18 der Laschenabschnitte 16 an. Dies hat den Vorteil, dass die Länge der Laschenabschnitte 16 weniger genau eingestellt werden muss.

Die vorangegangenen Ausführungsbeispiele betreffen eine Drehmomentbegrenzungsvorrichtung 1 mit einer Federeinrichtung 2, einer in axialer Richtung A der Drehmomentbegrenzungsvorrichtung 1 ortsfesten Mitnehmerscheibe 4, die einen Verbindungsbereich 6 zur Verbindung einer Eingangsseite 7 der Drehmomentbegrenzungsvorrichtung 1 mit einem Schwungrad eines Antriebsstrangs und einen Reibbereich 5 aufweist, einer in axialer Richtung A durch die Federeinrichtung 2 vorgespannten Gegenscheibe 13 und einer Klemmscheibe 19, die reibschlüssig zwischen dem Reibbereich 5 der Mitnehmerscheibe 4 und der Gegenscheibe 13 geklemmt ist, wobei die Gegenscheibe 13 zumindest einen sich in axialer Richtung A erstreckenden Laschenabschnitt 16 aufweist, der sich in radialer Richtung R der Drehmomentbegrenzungsvorrichtung 1 außerhalb der Klemmscheibe 19 durch zumindest eine in der Mitnehmerscheibe 4 eingebrachten Aussparung 11 hindurcherstreckt und über den die Gegenscheibe 13 durch die Federeinrichtung 2 entgegen der Mitnehmerscheibe 4 vorgespannt ist, um die Klemmscheibe 19 zwischen der Mitnehmerscheibe 4 und der Gegenscheibe 13 reibschlüssig zu klemmen, wobei die Mitnehmerscheibe 4 zumindest eine Fliehkraftsicherung 23 zur Verhinderung einer fliehkraftbedingten Verformung des Laschenabschnitts 16 aufweist.

### Bezugszeichenliste

- 1: Drehmomentbegrenzungsvorrichtung
- 2: Federeinrichtung
- 3: Tellerfeder
- 4: Mitnehmerscheibe
- 5: Reibbereich
- 6: Verbindungsbereich
- 7: Eingangsseite
- 8: Ausgangsseite
- 9: erste Seite der Mitnehmerscheibe
- 10: zweite Seite der Mitnehmerscheibe
- 11: Aussparung
- 12: Nockenabschnitt
- 13: Gegenscheibe
- 14: erste Seite der Gegenscheibe
- 15: zweite Seite der Gegenscheibe
- 16: Laschenabschnitt
- 17: freies Ende
- 18: Hakenbereich
- 19: Klemmscheibe
- 20: Reibbelag
- 21: erste Seite der Klemmscheibe
- 22: zweite Seite der Klemmscheibe
- 23: Fliehkraftsicherung
- 24: Zungenabschnitt
- 25: freies Ende
- 26: Sicherungsplättchen
- 27: Drahtring
- 28: Axialabschnitt
- A: axiale Richtung
- R: radiale Richtung
- U: Umfangsrichtung

## Patentansprüche

1. Drehmomentbegrenzungsvorrichtung (1) mit einer Federeinrichtung (2), einer in axialer Richtung (A) der Drehmomentbegrenzungsvorrichtung (1) ortsfesten Mitnehmerscheibe (4), die einen Verbindungsbereich (6) zur Verbindung einer Eingangsseite (7) der Drehmomentbegrenzungsvorrichtung (1) mit einem Schwungrad eines Antriebsstrangs und einen Reibbereich (5) aufweist, einer in axialer Richtung (A) durch die Federeinrichtung (2) vorgespannten Gegenscheibe (13) und einer Klemmscheibe (19), die reibschlüssig zwischen dem Reibbereich (5) der Mitnehmerscheibe (4) und der Gegenscheibe (13) geklemmt ist, wobei die Gegenscheibe (13) zumindest einen sich in axialer Richtung (A) erstreckenden Laschenabschnitt (16) aufweist, der sich in radialer Richtung (R) der Drehmomentbegrenzungsvorrichtung (1) außerhalb der Klemmscheibe (19) durch zumindest eine in der Mitnehmerscheibe (4) eingebrachten Aussparung (11) hindurcherstreckt und über den die Gegenscheibe (13) durch die Federeinrichtung (2) entgegen der Mitnehmerscheibe (4) vorgespannt ist, um die Klemmscheibe (19) zwischen der Mitnehmerscheibe (4) und der Gegenscheibe (13) reibschlüssig zu klemmen, dadurch gekennziechnet, dass die Mitnehmerscheibe (4) zumindest eine Fliehkraftsicherung (23) zur Verhinderung einer fliehkraftbedingten Verformung des Laschenabschnitts (16) aufweist.

2. Drehmomentbegrenzungsvorrichtung (1) nach Anspruch 1, wobei die Fliehkraftsicherung (23) innerhalb der Aussparung (11) angeordnet ist.

3. Drehmomentbegrenzungsvorrichtung (1) nach Anspruch 1 oder 2, wobei pro Aussparung (11) eine Fliehkraftsicherung (23) vorgesehen ist.

4. Drehmomentbegrenzungsvorrichtung (1) nach einem der Ansprüche 1 bis 3, wobei die Fliehkraftsicherung (23) zumindest einen Zungenabschnitt (24) aufweist, der einteilig mit der Mitnehmerscheibe (4) ausgebildet ist.

5. Drehmomentbegrenzungsvorrichtung (1) nach Anspruch 4, wobei ein freies Ende (25) des Zungenabschnitts (24) in radialer Richtung (R) von außen an einem Axialabschnitt (28) des Laschenabschnitts (16) anliegt.

6. Drehmomentbegrenzungsvorrichtung (1) nach Anspruch 4 oder 5, wobei der Zungenabschnitt (24) vollständig innerhalb der Aussparung (11) angeordnet ist.

7. Drehmomentbegrenzungsvorrichtung (1) nach Anspruch 4 oder 5, wobei der Zungenabschnitt (24) in axialer Richtung (A) aus der durch die restliche Mitnehmerscheibe (4) definierten Ebene hervorspringt.

8. Drehmomentbegrenzungsvorrichtung (1) nach einem der Ansprüche 4, 5 und 7, wobei die Fliehkraftsicherung (23) ferner einen Drahtring (27) aufweist, der zwischen dem Zungenabschnitt (24) und der restlichen Mitnehmerscheibe (4) geklemmt ist, und der in radialer Richtung (R) von außen am Laschenabschnitt (16) anliegt.

9. Drehmomentbegrenzungsvorrichtung (1) nach einem der Ansprüche 4, 5 und 7, wobei ein freies Ende (17) des Laschenabschnitts (16) einen Hakenbereich (18) aufweist, an dem der Zungenabschnitt (24) anliegt.

10. Drehmomentbegrenzungsvorrichtung (1) nach einem der Ansprüche 1 bis 3, wobei die Fliehkraftsicherung (23) ein Sicherungsplättchen (26) aufweist, das in die Aussparung (11) eingelassen ist, und das in radialer Richtung (R) von außen am Laschenabschnitt (16) anliegt.

## Claims

1. A torque-limiting device (1) having a spring apparatus (2), a driver plate (4) fixed in the axial direction (A) of the torque-limiting device (1) and having a friction region (5) and a connection region (6) for connecting an input side (7) of the torque-limiting device (1) to a flywheel of a drive train, a counterpart plate (13) preloaded in the axial direction (A) by the spring apparatus (2), and a clamping plate (19) which is frictionally clamped between the friction region (5) of the driver plate (4) and the counterpart plate (13), the counterpart plate (13) having at least one tab section (16) extending in the axial direction (A) and extending in the radial direction (R) of the torque-limiting device (1) outside the clamping plate (19) through at least one cutout (11) formed in the driver plate (4), by way of which tab section the counterpart plate (13) is preloaded against the driver plate (4) by the spring apparatus (2) in order to clamp the clamping plate (19) between the driver plate (4) and the counterpart plate (13) in a frictional manner, **characterised in that** the driver plate (4) has at least one centrifugal force guard (23) for preventing the tab section (16) from becoming deformed as a result of centrifugal force.

2. The torque-limiting device (1) according to claim 1, wherein the centrifugal force guard (23) is arranged within the cutout (11).

3. The torque-limiting device (1) according to claim 1 or 2, wherein a centrifugal force guard (23) is provided for each cutout (11).

4. The torque-limiting device (1) according to any one of claims 1 to 3, wherein the centrifugal force guard (23) has at least one tongue section (24) formed in one piece with the driver plate (4).

5. The torque-limiting device (1) according to claim 4, wherein a free end (25) of the tongue section (24) bears against an axial section (28) of the tab section (16) from the outside in the radial direction (R).

6. The torque-limiting device (1) according to claim 4 or 5, wherein the tongue section (24) is arranged fully within the cutout (11).

7. The torque-limiting device (1) according to claim 4 or 5, wherein the tongue section (24) projects in the axial direction (A) from the plane defined by the rest of the driver plate (4).

8. The torque-limiting device (1) according to any one of claims 4, 5 and 7, wherein the centrifugal force guard (23) further has a wire ring (27) clamped between the tongue section (24) and the rest of the driver plate (4) that bears against the tab section (16) from the outside in the radial direction (R).

9. The torque-limiting device (1) according to any one of claims 4, 5 and 7, wherein a free end (17) of the tab section (16) has a hook region (18) against which the tongue section (24) bears.

10. The torque-limiting device (1) according to any one of claims 1 to 3, wherein the centrifugal force guard (23) has a guard plate (26) that is let into the cutout (11) and bears against the tab portion (16) from the outside in the radial direction (R).

## Revendications

1. Dispositif de limitation de couple (1) comprenant un système de ressorts (2), un disque d'entraînement (4) fixé à demeure dans la direction axiale (A) du dispositif de limitation de couple (1) et présentant une zone de liaison (6) pour relier un côté d'entrée (7) du dispositif de limitation de couple (1) à un volant d'inertie d'une transmission et une zone de friction (5), un contre-disque (13) précontraint dans la direction axiale (A) par le système de ressorts (2), et un disque de serrage (19) qui est serré par friction entre la zone de friction (5) du disque d'entraînement (4) et le contre-disque (13), le contre-disque (13) présentant au moins une section patte (16) s'étendant dans la direction axiale (A) et dans la direction radiale (R) du dispositif de limitation de couple (1) à l'extérieur du disque de serrage (19) à travers au moins un évidement (11) ménagé dans le disque d'entraînement (4), et sur laquelle le contre-disque (13) est précontraint par le système de ressorts (2) à l'encontre du disque d'entraînement (4) pour serrer par friction le disque de serrage (19) entre le disque d'entraînement (4) et le contre-disque (13), **caractérisé en ce que** le disque d'entraînement (4) présente au moins une sécurité centrifuge (23) pour empêcher une déformation induite par la force centrifuge de la section patte (16).

2. Dispositif de limitation de couple (1) selon la revendication 1, le dispositif de limitation de couple (23) étant disposé dans l'évidement (11).

3. Dispositif de limitation de couple (1) selon la revendication 1 ou 2, dans lequel un dispositif de sécurité centrifuge (23) est prévu pour chaque évidement (11).

4. Dispositif de limitation de couple (1) selon l'une des revendications 1 à 3, dans lequel le dispositif de sécurité centrifuge (23) comporte au moins une section languette (24) formée d'un seul tenant avec le disque d'entraînement (4).

5. Dispositif de limitation de couple (1) selon la revendication 4, dans lequel une extrémité libre (25) de la section languette (24) vient en appui dans la direction radiale (R) depuis l'extérieur, sur une section axiale (28) de la section patte (16).

6. Dispositif de limitation de couple (1) selon la revendication 4 ou 5, dans lequel la section languette (24) est agencée entièrement à l'intérieur de l'évidement (11).

7. Dispositif de limitation de couple (1) selon la revendication 4 ou 5, dans lequel la section languette (24) fait saillie dans la direction axiale (A) à partir du plan défini par le disque d'entraînement (4) restant.

8. Dispositif de limitation de couple (1) selon l'une des revendications 4, 5 et 7, dans lequel le dispositif de sécurité centrifuge (23) comprend en outre une bague métallique (27) qui est serrée entre la section languette (24) et le disque d'entraînement (4) restant, et qui vient en appui sur la section patte (16) de l'extérieur dans une direction radiale (R).

9. Dispositif de limitation de couple (1) selon l'une des revendications 4, 5 et 7, dans lequel une extrémité libre (17) de la section patte (16) comporte une zone de crochet (18) sur laquelle la section languette (24) vient en appui.

10. Dispositif de limitation de couple (1) selon l'une des revendications 1 à 3, dans lequel le dispositif de sécurité centrifuge (23) comporte une petite plaque de verrouillage (26) qui est encastrée dans l'évidement (11) et qui vient en appui sur la section patte (16) de l'extérieur dans une direction radiale (R).
